(19) Europäisches Patentamt
European Patent Office
Office européen des brevets

(11) EP 4 172 264 B1

(12) EUROPEAN PATENT SPECIFICATION

(45) Date of publication and mention of the grant of the patent:
**12.06.2024 Bulletin 2024/24**

(21) Application number: **21730558.0**

(22) Date of filing: **01.06.2021**

(51) International Patent Classification (IPC):
***C08L 23/14*** *(2006.01)*

(52) Cooperative Patent Classification (CPC):
(C-Sets available)
**C08L 23/142;** C08L 2203/14; C08L 2308/00; C08L 2314/02 (Cont.)

(86) International application number:
**PCT/EP2021/064705**

(87) International publication number:
**WO 2022/002514 (06.01.2022 Gazette 2022/01)**

(54) **POLYPROPYLENE COMPOSITION**

POLYPROPYLENZUSAMMENSETZUNG

COMPOSITION DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2020 EP 20183010**

(43) Date of publication of application:
**03.05.2023 Bulletin 2023/18**

(73) Proprietor: **Basell Poliolefine Italia S.r.l.**
**20121 Milano (IT)**

(72) Inventors:
- **FERRARO, Gianpiero**
  **44122 Ferrara (IT)**
- **CAVALIERI, Claudio**
  **44122 Ferrara (IT)**
- **CATHELIN, Caroline**
  **44122 Ferrara (IT)**
- **CIACCIA, Eleonora**
  **44122 Ferrara (IT)**
- **CIARAFONI, Marco**
  **44122 Ferrara (IT)**
- **MONTALETTI, Ambra**
  **44122 Ferrara (IT)**
- **DE CAPUA, Alberta**
  **44122 Ferrara (IT)**
- **PANTALEONI, Roberto**
  **44122 Ferrara (IT)**
- **CAPUTO, Tiziana**
  **44122 Ferrara (IT)**
- **PRINI, Giansiro**
  **44122 Ferrara (IT)**
- **NARDIN, Alberto**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 1 674 530**
**WO-A1-2007/003523**
**WO-A1-2010/072841**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/142, C08L 23/16**

## Description

FIELD OF THE INVENTION

The present disclosure relates to polypropylene composition containing 1-hexene derived units having broad molecular weight distribution and high melt strength.

BACKGROUND OF THE INVENTION

It is known in the art that the processability in the molten state of propylene homo-and copolymers is mainly influenced by the molecular weight, normally expressed in terms of melt flow rates (MFR), and the molecular weight distribution (MWD). The molecular weight distribution can be either expressed as the ratio of the weight average molecular weight Mw to the number average molecular weight Mn or as the Polydispersity Index (P.I.).

Propylene polymers having broad molecular weight distribution or high Polydispersity Index have a lower melt viscosity than polymers having a narrow molecular weight distribution. As a result, said broad MWD propylene polymers flows more readily in thermoforming, injection molding, blow molding or stretch blow molding, coating and film conversion.

However, for certain applications, such as polymer foams, products having different flowability in combination with high melt strength are particularly desirable. It is known in the art to produce said polymers by melt blending propylene polymer fractions having different molecular weight or to produce reactor-blends of said fractions in multi-step polymerization.

EP 1 899 415 relates to Propylene homopolymers or copolymers containing up to 5.0 wt% of alpha-olefin units having from 2 to 8 carbon atoms other than propylene, characterized in that said propylene homopolymers or copolymers have Polydispersity Index value higher than 15 and a xylene soluble fraction of less than 4 wt%. However this document does not describes the polypropylene composition of the present disclosure.

However there Is the need to further polypropylene composition showing increased melt strength to be used in particular for foaming applications.

SUMMARY OF THE INVENTION

The present disclosure provides a polypropylene composition comprising:

A) from 70 wt% to 90 wt% of a propylene 1-hexene copolymer containing from 0.5 wt% to 3.5 wt% of 1-hexene derived units having:

- fraction soluble in xylene at 25°C comprised between 2.5 wt% and 8.0 wt%;
- melt flow rate (MFR L according to ISO 1133, condition L, i.e. 230°C and 2.16 kg load) ranging from 2.0 to 15.0 g/10 min; and

a polydispersity index (PI) comprised between 9.2 and 21.3;

B) from 10 wt% to 30 wt%, of a copolymer of propylene and ethylene containing from 45.0 wt% to 65.0 wt%, of ethylene derived units;

wherein in the polypropylene composition:

- the xylene soluble fraction at 25°C ranges from 10.0 wt% to 25.0 wt%;
- the intrinsic viscosity of the fraction soluble in xylene at 25°C ranges from 4.0 dl/g to 6.5 dl/g;
- the content of ethylene derived units in the fraction soluble in xylene at 25°C is lower than the content of ethylene derived units of component B) and ranges from 38.0 wt% to 55.0 wt%, and
- the distribution of molecular weight Mw/Mn ranges from 25 to 40;

the sum of component A) and B) being 100.

DETAILED DESCRIPTION OF THE INVENTION

The present disclosure provides a polypropylene composition comprising:

A) from 70 wt% to 90 wt%, preferably from 74 wt% to 86 wt% more preferably from 77 wt% to 82 wt% of a propylene 1-hexene copolymer containing from 0.5 wt% to 3.5 wt% preferably from 1.0 wt% to 2.9 wt%; more preferably from

1.2 wt% to 2.4 wt% of 1-hexene derived units having:

- fraction soluble in xylene at 25°C comprised between 2.5 wt% and 8.0 wt%; preferably comprised between 3.1 wt% and 6.8 wt%; more preferably comprised between 3.8 wt% and 5.9 wt%;
- melt flow rate (MFR L according to ISO 1133, condition L, i.e. 230°C and 2.16 kg load) ranging from 2.0 to 15.0 g/10 min; preferably ranging from 3.0 to 10.0 g/10 min; and
- polydispersity index (PI) comprised between 9.2 and 21.3; preferably comprised between 10.1 and 16.4; more preferably comprised between 11.3 and 14.2;

B) from 10 wt% to 30 wt%, preferably from 14 wt% to 26 wt% more preferably from 18 wt% 23 wt% to of a copolymer of propylene and ethylene containing from 45.0 wt% to 65.0 wt%,

preferably from 48.0 wt% to 61.0 wt%, more preferably from 50.0 wt% to 59.0 wt%, of ethylene derived units; wherein in the polypropylene composition:

- the xylene soluble fraction at 25°C ranges from 10.0 wt% to 25.0 wt%; preferably from 16.0 wt% to 22.0 wt%;
- the intrinsic viscosity of the fraction soluble in xylene at 25°C ranges from 4.0 dl/g to 6.5 dl/g;

preferably from 4.1 dl/g to 6.3 dl/g; more preferably 5.3 dl/g to 6.2 dl/g;

- the content of ethylene derived units in the fraction soluble in xylene at 25°C is equal to or lower than the content of ethylene derived units of component B) and ranges from 38.0 wt% to 55.0 wt%; preferably from 41.0 wt% to 52.0 wt%, more preferably from 43.0 wt% to 51.0 wt%, of ethylene derived units; and
- the distribution of molecular weight Mw/Mn ranges from 25 to 40; preferably from 28 to 38;

more preferably from 30 to 35;
the sum of component A) and B) being 100.

For the purpose of the present disclosure the term copolymer has to be intended as a polymer containing only two kind if monomers such as propylene and ethylene or propylene and 1-hexene.

Optionally the a copolymer of propylene and ethylene component B) can contain up to 0.6 wt% of 1-hexene derived units.

The composition of the present disclosure is endowed with high melt strength and therefore the polypropylene composition of the present disclosure is readily processable and have good flow properties in the molten state while retaining good mechanical properties, in particular high rigidity, high stress at yield high creep resistance and high heat distortion resistance.

The Melt Strength value is a measure of the applied linear force needed to break the polymer melt.

The composition of the present disclosure is endowed with a very broad molecular distribution of molecular weight Mw/Mn. Thanks to broad molecular distribution of molecular weight, the processability of the polypropylene composition of the present disclosure is considerably improved.

The polypropylene composition of the present disclosure is produced by sequential polymerization in at least two stages, with each subsequent polymerization stage being conducted in the presence of the polymeric material formed in the immediately preceding polymerization reaction, wherein the component (A) is normally prepared in at least one first polymerization stage and the component (B) is normally prepared in at least one second polymerization stage.

Component A) is produced in a polymerization process carried out in at least two interconnected polymerization zones. Said polymerization process is described in the European patent EP 782587 and in the International patent application WO00/02929. The process is carried out in a first and in a second interconnected polymerization zone to which propylene and ethylene or propylene and alpha-olefins are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s. In the second polymerization zone, where the polymer flows in densified form under the action of gravity, high values of density of the solid are reached which approach the bulk density of the polymer; a positive gain in pressure can thus be obtained along the direction of flow,

so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C, preferably from 70°C to 90°C. The process can be carried out under operating pressure of between 0,5 and 10 MPa, preferably between 1.5 and 6 MPa.

Preferably, the various catalyst components are fed to the first polymerization zone, at any point of said first polymerization zone. However, they can also be fed at any point of the second polymerization zone.

In the polymerization process means are provided which are capable of totally or partially preventing the gas and/or liquid mixture present in the raiser from entering the downcomer and a gas and/or liquid mixture having a composition different from the gas mixture present in the raiser is introduced into the downcomer. According to a preferred embodiment, the introduction into the downcomer, through one or more introduction lines, of said gas and/or liquid mixture having a composition different from the gas mixture present in the raiser is effective in preventing the latter mixture from entering the downcomer. The gas and/or liquid mixture of different composition to be fed to the downcomer can optionally be fed in partially or totally liquefied form. The molecular weight distribution and thus the P.I. value of the growing polymers can be conveniently tailored by carrying out the polymerization process in an reactor diagrammatically represented in Figure 4 of the International Patent Application WO00/02929 and by independently metering the comonomer(s) and customary molecular weight regulators, particularly hydrogen, in different proportion into at least one polymerization zone, preferably into the raiser.

Component B) is prepared in the second stage the propylene/ethylene copolymer (B) is produced in a conventional fluidized-bed gas-phase reactor in the presence of the polymeric material and the catalyst system coming from the preceding polymerization step.

Each polymerization stage is carried out in presence of a highly stereospecific heterogeneous Ziegler-Natta catalyst. The Ziegler-Natta catalysts suitable for producing the propylene polymer compositions of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application W000163261.

The polypropylene composition object of the present disclosure is preferably obtainable by polymerizing propylene and ethylene in various stages in the presence of a catalyst system comprising the product obtained by contacting the following components:

a) a solid catalyst component comprising a magnesium halide, a titanium compound having at least a Ti-halogen bond and at least one electron donor compound selected from succinates,
b) an aluminum hydrocarbyl compound, and
c) optionally an external electron donor compound.

In the solid catalyst component (a) the succinate is preferably selected from succinates of formula (I)

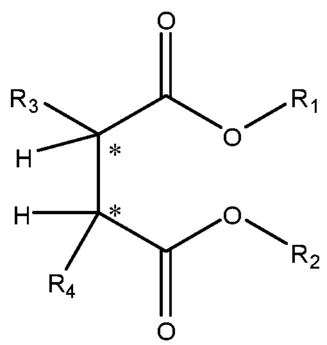

(I)

in which the radicals $R_1$ and $R_2$, equal to, or different from, each other are a $C_1$-$C_{20}$ linear or branched alkyl,

alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, $C_3$-$C_{20}$ cycloalkyl, $C_5$-$C_{20}$ aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

$R_1$ and $R_2$ are preferably Ci-Cs alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the R3 and/or R4 radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

As explained above, the catalyst component (a) comprises, in addition to the above electron donors, a titanium compound having at least a Ti-halogen bond and a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

Preferably, the catalyst component (a) has an average particle size ranging from 15 to 80 $\mu$m, more preferably from 20 to 70 $\mu$m and even more preferably from 25 to 65 $\mu$m.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1,trifluoropropylmetil-dimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane, n-hexane or n-heptane, at a temperature below about 60°C and preferably from about 0 to 30°C for a time period of from about 6 seconds to 60 minutes.

The above catalyst components (a), (b) and optionally (c) can be fed to a precontacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably said step (a) is carried out in the absence of inert hydrocarbon solvents.

The average residence time in this reactor generally ranges from 2 to 40 minutes, preferably from 10 to 25 minutes. The temperature ranges between 10°C and 50°C, preferably between 15°C and 35°C. Adopting these conditions allows to obtain a pre-polymerization degree in the preferred range from 60 to 800g per gram of solid catalyst component,

preferably from 150 to 500 g per gram of solid catalyst component. Step (a) is further characterized by a low concentration of solid in the slurry, typically in the range from 50 g to 300 g of solid per liter of slurry.

The polypropylene composition of the present disclosure can be used for the manufacturing of foamed articles, such as laminated and un-laminated sheet, beads, and profiles. Foams having densities in the range from 30 to 700 Kg/m3, in particular from 100 to 600 Kg/m3, can be obtained from the polypropylene composition of the present disclosure, finding application for thermal and electrical insulation, for noise and vibration damping, shock absorption and weight reduction.

In particular they can find application in the automotive field for bumper interiors and impact panels, in marine field as floating devices or in electrical cables insulation. The polypropylene composition of the present disclosure may be manufactured into foamed article by conventional methods. They may be extruded in the presence of at least one foaming agent in conventional single screw or twin screw extruders, both in single and multilayer constructions.

Foaming agents can be physical foaming agents, such as CO2, gaseous hydrocarbons, H2O, CFCs or mixtures thereof, or chemical foaming agents, such as inorganic carbonates, citric acid or their mixtures. Alternatively, The polypropylene composition of the present disclosure can be firstly pelletized and foamed and subsequently molded for the manufacturing of foamed polypropylene beads according to processes well known in the art. Foamed articles such as foamed coated or uncoated pipes and foamed packaging for foods can be manufactured using the polypropylene composition of the present disclosure.

The following examples are given to illustrate and not to limit the present invention.

## EXAMPLES

The data of the propylene polymer materials were obtained according to the following methods:

### Melt Flow Rate

Determined according to ISO 1133 (230° C, 2.16 kg).

### Polydispersity index (P.I.)

Some grams of molten homopolymer are submitted to a dynamic test in rate sweep with a parallel plate rheometer, at temperature of200°C, according to the ISO 6721-10. G’ (storage modulus) and G" (loss modulus) are measured as function of frequency. From the rate sweep data, PI is defined by PI=105/Gc, wherein Gc is the crossover modulus as value of modulus at G’ = G".

### hexene content (C6 content)

Determination of 1-hexene content by NMR

$^{13}C$ NMR spectra are acquired on an AV-600 spectrometer equipped with cryoprobe, operating at 150.91 MHz in the Fourier transform mode at 120 °C. The peak of the propylene CH was used as internal reference at 28.83. The 13C NMR spectrum is acquired using the following parameters:

| | |
|---|---|
| **[0048]** Spectral width (SW) | 60 ppm |
| Spectrum centre (O1) | 30 ppm |
| Decoupling sequence | WALTZ 65_64pl |
| Pulse program | ZGPG |
| Pulse Length (P1) | for 90° |
| Total number of points (TD) | 32 K |
| Relaxation Delay | 15 s |
| Number of transients | 512 |

The total amount of 1-hexene as molar percent is calculated from identified diad present in the measured NMR using the following relations:

$$[P] = PP + 0.5PH$$

$$[H] = HH + 0.5PH$$

Assignments of the $^{13}C$ NMR spectrum of propylene/1-hexene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}$+ $S_{\alpha\delta}$ | PE |
| 5 | 35.70 -35.0 | $4B_4$ | H |
| 6 | 35.00 - 34.53 | $S_{\alpha\gamma}$+ $S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

Determination of ethylene (C2) content by NMR

$^{13}C$ NMR of propylene/ethylene copolymers

$^{13}C$ NMR spectra were acquired on a Bruker AV-600 spectrometer equipped with cryoprobe, operating at 160.91 MHz in the Fourier transform mode at 120°C. It has been measured on the total composition. The ethylene content of component B) has been calculated by using the amount of component B) and component A) according to the following equation:

$$C_{2tot} = C_{2B} \text{ x wt\%compB}/100.$$

The samples were dissolved in 1,1,2,2-tetrachloroethane-d2 at 120°C with an 8% wt/v concentration. Each spectrum was acquired with a 90° pulse, 15 seconds of delay between pulses and CPD to remove $^1H$-$^{13}C$ coupling. 512 transients were stored in 32K data points using a spectral window of 9000 Hz.

Diad distibution is calculated according to the following relations:

$$PP = 100\ I_1/\Sigma$$

$$PH = 100\ I_2/\Sigma$$

$$HH = 100\ I_3/\Sigma$$

$$PE = 100\ I_4/\Sigma$$

$$HE = 100\ I_6/\Sigma$$

$$EE = 100\ (0.5(I_{13} + I_{16}) + 0.25\ I_{12})/\Sigma$$

Where $\Sigma = I_1 + I_2 + I_3 + I_4 + I_6 + 0.5(I_{13} + I_{16}) + 0.25\ I_{12}$
The total amount of 1-hexene and ethylene as molar percent is calculated from diad using the following relations:

$$[P] = PP + 0.5PH + 0.5PE$$

$$[H] = HH + 0.5PH + 0.5HE$$

$$[E] = EE + 0.5PE + 0.5HE$$

Assignments of the $^{13}C$ NMR spectrum of propylene, 1-hexene and ethylene

| Area | Chemical Shift | Assignments | Sequence |
|---|---|---|---|
| 1 | 46.93 - 46.00 | $S_{\alpha\alpha}$ | PP |
| 2 | 44.17 - 43.82 | $S_{\alpha\alpha}$ | PH |
| 3 | 41.30 | $S_{\alpha\alpha}$ | HH |
| 4 | 38.00 - 37.40 | $S_{\alpha\gamma}+ S_{\alpha\delta}$ | PE |
| 5 | 35.70 | $4B_4$ | H |
| 6 | 35.00 - 34.53 | $S_{\alpha\gamma}+ S_{\alpha\delta}$ | HE |
| 7 | 33.75 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |

(continued)

| Area | Chemical Shift | Assignments | Sequence |
|---|---|---|---|
| 16 | 24.67 -24.53 | $S_{\beta\beta}$ | XEX |
| 17 | 23.36 | $2B_4$ | H |
| 18 | 21.80 - 19.90 | $CH_3$ | P |
| 19 | 14.22 | $CH_3$ | H |

The molar percentage of ethylene content was evaluated using the following equation: E% mol = 100 * [PEP+PEE+EEE]. The weight percentage of ethylene content was evaluated using the following equation:

$$E\%\ wt. = \frac{100 * E\%\ mol * MW_E}{E\%\ mol - MW_E + P\%\ mol * MW_P}$$

where P% mol is the molar percentage of propylene content, while $MW_E$ and $MW_P$ are the molecular weights of ethylene and propylene, respectively.

Molar ratios of the feed gases

Determined by gas-chromatography.

Samples for the mechanical analysis

Samples have been obtained according to ISO 294-2

Flexural Modulus

Determined according to ISO 178.

Melt strength

Measure according to ISO 16790, the melt strength is the measure of the drawing and break characteristics of plastics through the measurement of the force (in newton) generated in deforming a molten filament under defined extrusion temperature and drawing conditions.

Melting temperature, melting enthalpy and crystallization temperature

Determined according to ISO 11357-3, at scanning rate of 20C/min both in cooling and heating, on a sample of weight between 5 and 7 mg. under inert N2 flow. Instrument calibration made with Indium.

Xylene soluble and insoluble fractions at 25°C (room temperature)

Xylene Solubles according to ISO 16 152; with solution volume of 250 ml, precipitation at 25°C for 20 minutes, 10 of which with the solution in agitation (magnetic stirrer), and drying at 70°C under vacuum.

Intrinsic Viscosity (I.V.)

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

IZOD impact strength

Determined according to ISO 180/1A

**Example 1 according to the invention**

Preparation of the solid catalyst component

The Ziegler-Natta catalyst was prepared according to the Example 5, lines 48-55 of the European Patent EP728769. Triethylalurninium (TEAL) was used as co-catalyst and dicyclopentyldimethoxysilane as external donor.

**Polymerization**

The polymerization runs were conducted in continuous in a series of two reactors equipped with devices to transfer the product from one reactor to the one immediately next to it. The first reactor is a polymerisation apparatus as described in WO00/02929.

The catalyst is sent to the polymerisation apparatus that comprises two interconnected cylindrical reactors, riser and downcomer. Fast fluidisation conditions are established in the riser by recycling gas from the gas-solid separator, "Barrier" effect has been activated. The obtained product is then feed to a fluid bed gas phase reactor. Hydrogen was used as molecular weight regulator.

Component (A) is prepared in the first reactor, while component (B) is prepared in the second reactor.

Hydrogen is used as molecular weight regulator.

The gas phase (propylene, ethylene, 1-hexene and hydrogen) is continuously analyzed via gas-chromatography.

At the end of the run the powder is discharged and dried under a nitrogen flow.

The main polymerization conditions are reported in Table1.

Table 1

| **Example** | | 1 | 2 | Comp 3 |
|---|---|---|---|---|
| **Component A) (reactor MZCR)** | | | | |
| TEAL/external donor | wt/wt | 10 | 10 | 11 |
| TEAL/catalyst | wt/wt | 5 | 5 | 4 |
| Temperature | °C | 80 | 80 | 80 |
| Pressure | bar-g | 24 | 24 | 24 |
| Split holdup riser | wt% | 65 | 60 | 64 |
| downcomer | wt% | 35 | 40 | 36 |
| $C_3^-$ riser | mole% | 82.9 | 86.8 | 87.1 |
| $C_{6-}$ riser | mole% | 1.27 | 1.28 | 0.88 |
| $H_2/C_3^-$ riser | mol/mol | 0.07 | 0.072 | 0.035 |
| $C_6^-/(C_6^-+C_3^-)$ riser | mol/mol | 0.016 | 0.015 | 0.01 |
| $C_3^-$ downcomer | mole% | 85 | 90 | 90 |
| $C_6^-$ downcomer | mole% | 2.0 | 2.0 | 2.0 |
| $H_2/C_3^-$ downcomer | mol/mol | 0.0001 | 0.0001 | 0.0001 |
| $C_6^-/(C_6^-+C_3^-)$ downcomer | mol/mol | 0.023 | 0.022 | 0.015 |
| Component B (gas phase reactor) | | | | |
| Temperature | °C | 80 | 80 | --- |
| Pressure | MPa | 20 | 20 | --- |

(continued)

| Component B (gas phase reactor) | | | | |
|---|---|---|---|---|
| $C_2^-/C_2^-+C_3^-$ | mol/mol | 0.49 | 0.49 | --- |
| $H_2/C_2^-$ | mol/mol | 0.011 | 0.0065 | --- |
| $C_2^-$= ethylene $C_3^-$ = propylene $C_3^-$ 1-hexene | | | | |

The polymers features are reported in table 2

Table 2

| Example | | Ex1 | Ex 2 | Comp ex 3 |
|---|---|---|---|---|
| **Component a)** | | | | |
| Copolymer content | wt% | 79 | 81 | - |
| 1-hexene content | wt% | 1.6 | 1.6 | 1.2 |
| MFR | g/10' | 5 | 5 | 5 |
| Xylene soluble at 25°C | wt% | 4.9 | 4.9 | 4.9 |
| Polydisperity (P.I.) | | 12.9 | 12.9 | 12.9 |
| | | | | |
| **Component b)** | | | | |
| Copolymer content | wt% | 21 | 19 | - |
| Ethylene content in component b) | wt% | 57.3 | 51.2 | - |
| **Property of the composition** | | | | |
| Xylene soluble at 25°C | wt% | 19.8 | 16.2 | - |
| MFR | g/10' | 1.6 | 2.0 | - |
| XSIV (intrinsic viscosity of XS) | dl/g | 4.41 | 5.96 | - |
| Ethylene content on the xylene soluble fraction | Wt% | 47.8 | 45.5 | - |
| | | | | |
| Flexural Modulus | MPa | 930 | 1020 | 1380 |
| Izod impact at 23 °C | $KJ/m^2$ | 15.6 | 9.5 | 3.7 |
| Izod impact at 0 °C | $KJ/m^2$ | 7 | 5.1 | 3.7 |
| Izod impact at -20°C | $KJ/m^2$ | 5.3 | 3.7 | - |
| charpy impact at 23 °C | $KJ/m^2$ | 14.4 | 8.7 | 4.3 |
| charpy impact at 0 °C | $KJ/m^2$ | 6.6 | 4.3 | 1.4 |
| charpy impact at -20 °C | $KJ/m^2$ | 5.3 | 4.2 | 1.4 |
| Elongation @ break | % | 500 | 440 | 440 |
| Melting temperature | °C | 148.5 | 147.8 | 151.6 |
| Melt strength 230°C | | **6** | **6** | **4** |
| Mw/Mn | | 30.8 | 33.2 | 23.6 |

The compositions of examples 1, 2 and comparative example 3 has been blended with a standard additivation package.

**Foaming**

Foils were produced PM chill roll foil line with an extruder configuration of Ø 30 mm, LID 25:1 and flat die of width 350 mm and gap opening of 1 mm. The chemical blowing agent (CBAs) used is HYDROCEROL® CT 660 from Clariant at 2% loading. The foils were produced using bell-shaped temperature profiles, adjusted individually for each sample.

Thermoforming process

Thermoforming was performed in the Formech TF686 vacuum former using a Ø250 mm deep tray (h80 mm) positive bowl. Sheets were heated to 215 °C (pyrometer) using a mould temperature 60 °C.
The results of the foamed thermoformed examples are reported in table 3

Table 3

| 2% Hydrocerol CT660 | Melt strenght | Final density (g/ml) | Rating processual/visual (1 is the best) | forming properties | appearance (mould @60°C) |
|---|---|---|---|---|---|
| Comp ex 3 | 4 | 0,55 | 4 | some webbing | good |
| Ex 2 | 6 | 0,60 | 1 | easy | good |
| Ex 1 | 6 | 0,58 | 2 | easy | good |

## Claims

1. A polypropylene composition comprising:

A) from 70 wt% to 90 wt% of a propylene 1-hexene copolymer containing from 0.5 wt% to 3.5 wt% of 1-hexene derived units having:

- fraction soluble in xylene at 25°C comprised between 2.5 wt% and 8.0 wt%;
- melt flow rate (MFR L ISO 1133, condition L, i.e. 230°C and 2.16 kg load) ranging from 2.0 to 15.0 g/10 min; and
- a polydispersity index (PI) comprised between 9.2 and 21.3;

B) from 10 wt% to 30 wt%, of a copolymer of propylene and ethylene containing from 45.0 wt% to 65.0 wt%, of ethylene derived units;
Wherein in the polypropylene composition:

- the xylene soluble fraction at 25°C ranges from 10.0 wt% to 25.0 wt%;
- the intrinsic viscosity of the fraction soluble in xylene at 25°C ranges from 4.0 dl/g to 6.5 dl/g;
- the content of ethylene derived units in the fraction soluble in xylene at 25°C is lower than the content of ethylene derived units of component B) and ranges from 38.0 wt% to 55.0 wt%, and
- the distribution of molecular weight Mw/Mn ranges from 25 to 40;

the sum of component A) and B) being 100

2. The polypropylene composition according to claim 1 wherein component (A) ranges from from 74 wt% to 86 wt% and component B) ranges from 14 wt% to 26 wt%.

3. The polypropylene composition according to claims 1 or 2 wherein in component A) the propylene 1-hexene copolymer contains from 1.0 wt% to 2.9 wt%.

4. The polypropylene composition according to anyone of claims 1-3 wherein component A) has a polydispersity index (PI) comprised between 10.1 and 16.4.

5. The polypropylene composition according to anyone of claims 1-4 wherein component A) has the fraction soluble

in xylene at 25°C comprised between 3.1 wt% and 6.8 wt%.

6. The polypropylene composition according to anyone of claims 1-5 wherein the copolymer of propylene and ethylene of component B) contains from 48.0 wt% to 61.0 wt%.

7. The polypropylene composition according to anyone of claims 1-6 wherein the xylene soluble fraction at 25°C ranges from 16.0 wt% to 22.0 wt%.

8. The polypropylene composition according to anyone of claims 1-7 wherein the intrinsic viscosity of the fraction soluble in xylene at 25°C ranges from 4.1 dl/g to 6.3 dl/g.

9. The polypropylene composition according to anyone of claims 1-8 wherein the content of ethylene derived units in the fraction soluble in xylene at 25°C ranges from 41.0 wt% to 52.0 wt%.

10. The polypropylene composition according to anyone of claims 1-9 wherein the distribution of molecular weight Mw/Mn ranges from 28 to 38.

11. The polypropylene composition according to anyone of claims 1-10 wherein the content of ethylene derived units in the fraction soluble in xylene at 25°C ranges from 43.0 wt% to 51.0 wt%.

12. The polypropylene composition according to anyone of claims 1-11 wherein the distribution of molecular weight Mw/Mn ranges from 30 to 35.

13. The polypropylene composition according to anyone of claims 1-2 wherein the intrinsic viscosity of the fraction soluble in xylene at 25°C ranges from 5.3 dl/g to 6.2 dl/g

14. The polypropylene composition according to anyone of claims 1-13 wherein the copolymer of propylene and ethylene of component B) contains from 50.0 wt% to 59.0 wt%, of ethylene derived units.

15. Foamed articles comprising the polypropylene composition of claims 1-14.

**Patentansprüche**

1. Polypropylenzusammensetzung, umfassend:

A) 70 Gew.% bis 90 Gew.% eines Propylen-1-Hexen-Copolymers, das 0,5 Gew.% bis 3,5 Gew.% von 1-Hexen abgeleitete Einheiten enthält, mit:

- einer in Xylol bei 25 °C lösliche Fraktion zwischen 2,5 Gew.% und 8,0 Gew.%;
- einer Schmelzflussrate (MFR L, ISO 1133, Bedingung L, d. h. 230 °C und 2,16 kg Last) im Bereich von 2,0 bis 15,0 g/10 min; und
- einem Polydispersitätsindex (PI) zwischen 9,2 und 21,3;

B) 10 Gew.% bis 30 Gew.% eines Copolymers von Propylen und Ethylen, das 45,0 Gew.% bis 65,0 Gew.% von Ethylen abgeleiteten Einheiten enthält;
wobei in der Polypropylenzusammensetzung:

- die in Xylol bei 25 °C lösliche Fraktion im Bereich von 10,0 Gew.% bis 25,0 Gew.% liegt;
- die Grenzviskosität der in Xylol bei 25 °C löslichen Fraktion im Bereich von 4,0 dl/g bis 6,5 dl/g liegt;
- der Gehalt an von Ethylen abgeleiteten Einheiten in der in Xylol bei 25 °C löslichen Fraktion niedriger als der Gehalt der von Ethylen abgeleiteten Einheiten der Komponente B) ist und im Bereich von 38,0 Gew.% bis 55,0 Gew.% liegt, und
- die Molekulargewichtsverteilung Mw/Mn im Bereich von 25 bis 40 liegt;

wobei die Summe von A) und B) 100 beträgt.

2. Polypropylenzusammensetzung nach Anspruch 1, wobei Komponente (A) im Bereich von 74 Gew.% bis 86 Gew.%

liegt und Komponente B) im Bereich von 14 Gew.% bis 26 Gew.% liegt.

3. Polypropylenzusammensetzung nach einem der Ansprüche 1 oder 2, wobei in Komponente A) das Propylen-1-Hexen-Copolymer 1,0 Gew.% bis 2,9 Gew.% enthält.

4. Polypropylenzusammensetzung nach einem der Ansprüche 1 bis 3, wobei Komponente A) einen Polydispersitätsindex (PI) zwischen 10,1 und 16,4 hat.

5. Polypropylenzusammensetzung nach einem der Ansprüche 1 bis 4, wobei Komponente A) eine in Xylol bei 25 °C lösliche Fraktion zwischen 3,1 Gew.% und 6,8 Gew.% aufweist.

6. Polypropylenzusammensetzung nach einem der Ansprüche 1 bis 5, wobei das Copolymer von Propylen und Ethylen von Komponente B) 48,0 Gew.% bis 61,0 Gew.% enthält.

7. Polypropylenzusammensetzung nach einem der Ansprüche 1 bis 6, wobei die in Xylol bei 25 °C lösliche Fraktion im Bereich von 16,0 Gew.% bis 22,0 Gew.% liegt.

8. Polypropylenzusammensetzung nach einem der Ansprüche 1 bis 7, wobei die Grenzviskosität der in Xylol bei 25 °C löslichen Fraktion im Bereich von 4,1 dl/g bis 6,3 dl/g liegt.

9. Polypropylenzusammensetzung nach einem der Ansprüche 1 bis 8, wobei der Gehalt an von Ethylen abgeleiteten Einheiten in der in Xylol bei 25 °C löslichen Fraktion im Bereich von 41,0 Gew.% bis 52,0 Gew.% liegt.

10. Polypropylenzusammensetzung nach einem der Ansprüche 1 bis 9, wobei die Molekulargewichtsverteilung Mw/Mn im Bereich von 28 bis 38 liegt.

11. Polypropylenzusammensetzung nach einem der Ansprüche 1 bis 10, wobei der Gehalt an von Ethylen abgeleiteten Einheiten in der in Xylol bei 25 °C löslichen Fraktion im Bereich von 43,0 Gew.% bis 51,0 Gew.% liegt.

12. Polypropylenzusammensetzung nach einem der Ansprüche 1 bis 11, wobei die Molekulargewichtsverteilung Mw/Mn im Bereich von 30 bis 35 liegt.

13. Polypropylenzusammensetzung nach einem der Ansprüche 1 bis 2, wobei die Grenzviskosität der in Xylol bei 25 °C löslichen Fraktion im Bereich von 5,3 dl/g bis 6,2 dl/g liegt.

14. Polypropylenzusammensetzung nach einem der Ansprüche 1 bis 13, wobei das Copolymer von Propylen und Ethylen von Komponente B) 50,0 Gew.% bis 59,0 Gew.% von Ethylen abgeleitete Einheiten enthält.

15. Geschäumte Artikel, umfassend die Polypropylenzusammensetzung der Ansprüche 1 bis 14.

## Revendications

1. Composition de polypropylène comprenant :

   A) 70 % en poids à 90 % en poids d’un copolymère de propylène et de 1-hexène contenant 0,5 % en poids à 3,5 % en poids de motifs dérivés du 1-hexène présentant :

   - une fraction soluble dans le xylène à 25 °C située entre 2,5 % en poids et 8,0 % en poids ;
   - un indice de fluidité à chaud (MFR L ISO 1133, condition L, c’est-à-dire 230 °C et une charge de 2,16 kg) situé dans la plage de 2,0 à 15,0 g/10 min ; et
   - un indice de polydispersité (PI) situé entre 9,2 et 21,3 ;

   B) 10 % en poids à 30 % en poids d’un copolymère de propylène et d’éthylène contenant 45,0 % en poids à 65,0 % en poids de motifs dérivés de l’éthylène ;
   dans laquelle, dans la composition de polypropylène :

   - la fraction soluble dans le xylène à 25 °C est située dans la plage de 10,0 % en poids à 25,0 % en poids ;

- la viscosité intrinsèque de la fraction soluble dans le xylène à 25 °C est située dans la plage de 4,0 dl/g à 6,5 dl/g ;
- la teneur en motifs dérivés de l'éthylène dans la fraction soluble dans le xylène à 25 °C est inférieure à la teneur en motifs dérivés de l'éthylène du constituant B) et est située dans la plage de 38,0 % en poids à 55,0 % en poids et
- la distribution des poids moléculaires Mw/Mn est située dans la plage de 25 à 40 ;

la somme des constituants A) et B) valant 100.

**2.** Composition de polypropylène selon la revendication 1, le constituant (A) étant situé dans la plage de 74 % en poids à 86 % en poids et le constituant B) étant situé dans la plage de 14 % en poids à 26 % en poids.

**3.** Composition de polypropylène selon les revendications 1 ou 2, dans laquelle, dans le constituant A), le copolymère de propylène et de 1-hexène contient 1,0 % en poids à 2,9 % en poids.

**4.** Composition de polypropylène selon l'une quelconque des revendications 1 à 3, le constituant A) présentant un indice de polydispersité (PI) situé entre 10,1 et 16,4.

**5.** Composition de polypropylène selon l'une quelconque des revendications 1 à 4, le constituant A) présentant la fraction soluble dans le xylène à 25 °C située entre 3,1 % en poids et 6,8 % en poids.

**6.** Composition de polypropylène selon l'une quelconque des revendications 1 à 5, le copolymère de propylène et d'éthylène du constituant B) contenant 48,0 % en poids à 61,0 % en poids.

**7.** Composition de polypropylène selon l'une quelconque des revendications 1 à 6, la fraction soluble dans le xylène à 25 °C étant située dans la plage de 16,0 % en poids à 22,0 % en poids.

**8.** Composition de polypropylène selon l'une quelconque des revendications 1 à 7, la viscosité intrinsèque de la fraction soluble dans le xylène à 25 °C étant située dans la plage de 4,1 dl/g à 6,3 dl/g.

**9.** Composition de polypropylène selon l'une quelconque des revendications 1 à 8, la teneur en motifs dérivés de l'éthylène dans la fraction soluble dans le xylène à 25 °C étant située dans la plage de 41,0 % en poids à 52,0 % en poids.

**10.** Composition de polypropylène selon l'une quelconque des revendications 1 à 9, la distribution des poids moléculaires Mw/Mn étant située dans la plage de 28 à 38.

**11.** Composition de polypropylène selon l'une quelconque des revendications 1 à 10, la teneur en motifs dérivés de l'éthylène dans la fraction soluble dans le xylène à 25 °C étant située dans la plage de 43,0 % en poids à 51,0 % en poids.

**12.** Composition de polypropylène selon l'une quelconque des revendications 1 à 11, la distribution des poids moléculaires Mw/Mn étant située dans la plage de 30 à 35.

**13.** Composition de polypropylène selon l'une quelconque des revendications 1 à 2, la viscosité intrinsèque de la fraction soluble dans le xylène à 25 °C étant située dans la plage de 5,3 dl/g à 6,2 dl/g.

**14.** Composition de polypropylène selon l'une quelconque des revendications 1 à 13, le copolymère de propylène et d'éthylène du constituant B) contenant 50,0 % en poids à 59,0 % en poids de motifs dérivés de l'éthylène.

**15.** Articles moussés comprenant la composition de polypropylène selon les revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1899415 A
- EP 782587 A
- WO 0002929 A
- EP 45977 A
- EP 361494 A
- EP 728769 A
- EP 1272533 A
- WO 00163261 A
- US 4298718 A
- US 4495338 A